# EUROPÄISCHE PATENTSCHRIFT

(11) **EP 2 907 227 B1**
(45) Veröffentlichungstag und Bekanntmachung des Hinweises auf die Patenterteilung: **05.12.2018**
(21) Anmeldenummer: 13759762.1
(22) Anmeldetag: 11.09.2013
(51) Int. Cl.: H02M 1/14, H02M 1/44, H02M 3/158

(54) **MULTISTRING-WECHSELRICHTER MIT EINGANGSSEITIGEM EMV-FILTER**
MULTI-STRING INVERTER HAVING INPUT-SIDE EMC FILTER
ONDULEUR MULTISTRING ÉQUIPÉ D'UN FILTRE EMV DU CÔTÉ ENTRÉE

(30) Priorität: 10.10.2012 DE 102012109638
(43) Veröffentlichungstag der Anmeldung: 19.08.2015
(73) Patentinhaber: SMA Solar Technology AG, 34266 Niestetal (DE)
(72) Erfinder: BERGER, Niels, 34266 Niestetal (DE); NAPIERALA, Tomasz, 13583 Berlin (DE); BUCHHOLD, Stefan, 34253 Lohfelden (DE); PINNE, Julia, 34246 Vellmar (DE); RÜCKMANN, Frank, 34266 Niestetal (DE); WOLF, Henrik, 34131 Kassel (DE)
(74) Vertreter: Lahnor, Peter
(86) Internationale Anmeldenummer: PCT/EP2013/068811
(87) Internationale Veröffentlichungsnummer: WO 2014/056668

(56) Entgegenhaltungen:
- EP-A1- 1 209 704
- EP-A1- 2 276 136
- WO-A1-2011/087045
- WO-A1-2012/109703
- JP-A- 2005 184 075
- US-A1- 2008 291 706
- Schwab, Adolf; Kürner, Wolfgang: "Elektromagnetische Verträglichkeit", 2011, Springer Verlag, Heidelberg, XP002731659, ISBN: 978-3-642-16609-9 Seite 111 - Seite 112 Seite 157 - Seite 175 Seite 461

## Beschreibung

### TECHNISCHES GEBIET DER ERFINDUNG

Die Erfindung bezieht sich auf einen Wechselrichter mit den Merkmalen des Oberbegriffs des unabhängigen Patentanspruchs 1. Aufgrund der mehreren Eingänge und mehreren DC/DC-Wandler eines solchen Wechselrichters können mehrere Stromquellen angeschlossen und bei unterschiedlichen Spannungen betrieben werden. Dies erlaubt es beispielsweise, bei mehreren an den Wechselrichter angeschlossenen Photovoltaikgeneratoren ein voneinander unabhängiges MPP-Tracking durchzuführen. Derartige Wechselrichter werden dann auch als Multistring-Wechselrichter bezeichnet.

Mit dem EMV-Filter, das zwischen den Eingängen und den zugehörigen DC/DC-Wandlern vorgesehen ist, wird die Einkopplung von Störungen aus dem Bereich des Wechselrichters in die angeschlossenen Stromquellen verhindert. So besteht besonders bei angeschlossenen Photovoltaikgeneratoren aufgrund deren großen Fläche die Gefahr, dass sie bei eingekoppelten Störungen als Senderantennen für elektromagnetische Wellen wirken. Zur Vermeidung der Abstrahlung solcher elektromagnetischer Wellen ist das EMV-Filter auf die in den entsprechenden Normen (z. B.: CE, FCC Bestimmungen) definierten EMV-Grenzwerte abzustimmen. Bei Einhaltung dieser Grenzwerte durch den Wechselrichter ist davon auszugehen, dass die Abstrahlung der elektromagnetischen Wellen in ausreichender Form reduziert ist.

### STAND DER TECHNIK

Bei Drosseln eines EMV-Filters, die neben zu unterdrückenden Störungen von einem Gleichstrom durchflossen werden, ist es bekannt, eine Sättigung ihres Kerns bereits durch den Gleichstrom dadurch zu verhindern, dass die Drosseln in einem Vorwärtsleiter und einen zugehörigen Rückleiter für den Gleichstrom so auf einen gemeinsamen Kern gewickelt werden, dass sich die Magnetisierungen des Kerns aufgrund des Gleichstroms durch die beiden Drosseln aufheben. Gleichtaktstörungen, die auf einer Seite der Drosseln in den Vorwärtsleiter und den Rückleiter eingekoppelt werden, resultieren hingegen in eine bei null beginnende variable Magnetisierung des Kerns und werden entsprechend gedämpft. Solche Drosseln mit mehreren Drosselwicklungen auf einem gemeinsamen Kern werden zusammen als stromkompensierte Drossel bezeichnet.

Die Verwendung jeweils einer stromkompensierten Drossel für die beiden Leitungen, die von einem von mehreren Eingängen eines Multistring-Wechselrichters zu dem zugehörigen DC/DC-Wandler führen, ist z. B. von den Produkten Sunny Boy 4200 TL HC und Sunny Boy 5000 TL HC der Anmelderin bekannt. Das EMV-Filter eines solchen Multistring-Wechselrichters mit einer stromkompensierten Drossel je Eingang weist in seiner Gesamtheit jedoch einerseits eine erhebliche Masse aufgrund seiner Drosseln und zugleich keine Filterwirkung auf, die über die verschiedenen Betriebsarten des Multistring-Wechselrichters hinweg optimal ist.

Die bisher typische Betriebsart eines Multistring-Wechselrichters ist durch ein voneinander unabhängiges MPP-Tracking der einzelnen an den Multistring-Wechselrichter angeschlossenen Photovoltaikgeneratoren charakterisiert. Im Hinblick auf eine Anwendung von Multistring-Wechselrichtern innerhalb größerer Photovoltaik-Anlagen rückt jedoch auch eine weitere, bisher nicht relevante Betriebsart in den Fokus. Diese Betriebsart ist durch eine harte Parallelschaltung mindestens zweier DC-Eingänge des Multistring-Wechselrichters charakterisiert. Die an die parallel geschalteten DC-Eingänge angeschlossenen Photovoltaikgeneratoren werden somit im Betrieb wie ein einziger Photovoltaikgenerator mit einheitlichem MPP-Tracking betrieben. Zu den möglichen Betriebsarten eines auch innerhalb größerer Photovoltaikanlagen einsetzbaren Multistring-Wechselrichters gehört daher auch eine Betriebsart, bei der mehrere DC-Eingänge des Multistring-Wechselrichters hart gekoppelt sind.

Das harte Koppeln verschiedener Photovoltaikgeneratoren kann bereits im Feld aber auch durch Brücken der verschiedenen Eingänge des Multistring-Wechselrichters erfolgen und führt dazu, dass die entsprechenden DC/DC-Wandler zwischen den hart gekoppelten Eingängen einerseits und dem Gleichspannungszwischenkreis auf der Eingangsseite des nachgeschalteten DC/AC-Wandlers andererseits parallel geschaltet sind. In diesem Fall können bereits kleine Unsymmetrien der DC/DC-Wandler zur Folge haben, dass der Rückfluss des Gleichstroms von einem der Eingänge zu einem anderen der Eingänge erfolgt und dass dadurch die Kerne der beiden diesen Eingängen zugeordneten stromkompensierten Drosseln bereits durch den unsymmetrisch verteilten Gleichstrom gesättigt sind. Sie fallen damit für die mit ihnen eigentlich beabsichtigte Dämpfung höherfrequenter Gleichtaktstörungen aus.

Die EP 2 276 136 A1**,** die einen Überspannungsschutz für Wechselrichter mit eingangsseitigem EMV-Filter betrifft, beschreibt einen Wechselrichter mit einer Gleichspannungs-Eingangsstufe. Zu der Gleichspannungs-Eingangsstufe gehört ein EMV-Filter, das Entstörinduktivitäten in allen vier von zwei Photovoltaikgeneratoren kommenden Zuleitungen aufweist, wobei die Entstörinduktivitäten in den beiden Zuleitungen für jeden Photovoltaikgenerator magnetisch zu einer stromkompensierten Drossel gekoppelt sind. Weiterhin umfasst das EMV-Filter Entstörkapazitäten, die zwischen den jeweils zwei Zuleitungen eines Photovoltaikgenerators einerseits und den Zuleitungen und Erde andererseits vorgesehen sind. Von den Photovoltaikgeneratoren aus gesehen vor dem EMV-Filter sind Überspannungsableiter vorgesehen, die transiente Überspannungen auf jede der Zuleitungen gegenüber einer der anderen Zuleitungen oder Erde ableiten. Von den Photovoltaikgeneratoren aus gesehen hinter dem EMV-Filter ist zusätzlich ein sekundärer Überspannungsschutz vorgesehen, der die nachgeschalteten Teile des Wechselrichters vor transienten Überspannungen schützt, die trotz des primären Überspannungsschutzes bis hinter das EMV-Filter gelangen oder die durch das zu Schwingungen angeregte EMV-Filter sogar wieder verstärkt werden. Der sekundäre Überspannungsschutz weist Überspannungsableiter auf, die zwischen eigene stromführende Zuleitungen jedes der beiden Photovoltaikgeneratoren einerseits sowie Erde andererseits und eine hinter dem EMV-Filter zusammengefasste stromführende Leitung beider Photovoltaikgeneratoren einerseits sowie Erde andererseits geschaltet sind. Alle stromführenden Leitungen führen einem DC/DC-Wandler der Gleichspannungs-Eingangsstufe Strom zu. Weiterhin sind in der Gleichspannungs-Eingangsstufe Pufferkapazitäten vorgesehen.

Aus der EP 1 209 704 A1 ist eine stromkompensierte Drossel mit einem Kern aus ferromagnetischem Material zur Unterdrückung von hochfrequenten Störsignalen in einer elektrischen Schaltung eines Zweispannungssystems bekannt. Die elektrische Schaltung besteht aus mindestens zwei Schaltkreisen, die einen gemeinsamen Referenzstrompfad und jeweils einen eigenen Strompfad aufweisen. In den beiden Schaltkreisen liegen unterschiedliche Spannungen zwischen dem jeweils eigenen Strompfad und dem gemeinsamen Referenzstrompfad vor. Die beiden Schaltkreise haben nur den Referenzstrompfad gemeinsam. In dem Referenzstrompfad und den eigenen Strompfaden der Schaltkreise sind Drosseln angeordnet, die jeweils durch eine Drosselwicklung gleicher Windungszahl auf einem gemeinsamen Kern ausgebildet sind. Die in den einzelnen Schaltkreisen über die eigenen Strompfade vorwärts und über den gemeinsamen Referenzstrompfad zurückfließenden Ströme rufen sich wechselseitig kompensierende Magnetisierungen des gemeinsamen Kerns hervor. Die derart mehrfach stromkompensierte Drossel mit der einen Drosselwicklung für den gemeinsamen Referenzstrompfad ersetzt zwei stromkompensierte Drosseln mit jeweils zwei Drosselwicklungen, die für zwei vollständig getrennte Schaltkreise vorzusehen wären. Der Kern der mehrfach stromkompensierten Drossel ist vorzugsweise ein ringförmiger Kern, auf dem die drei Drosselwindungen im Abstand von 120° angeordnet sind. Aufgrund der Figuren der EP 1 209 704 A1 ist eine Verwendung der bekannten stromkompensierten Drossel mit drei Drosselwicklungen zwischen einem DC/DC-Wandler mit mehreren Ausgängen und verschiedenen Lichtquellen vorgesehen. Eine derartige Schaltung wird insbesondere in einem Zweispannungsbordnetz eines Kraftfahrzeuges verwendet. Dies ist eine Verwendung in einem Bereich deutlich kleinerer elektrischer Leistungen und auch kleinerer Ströme als sie durch ein EMV-Filter bei einem Wechselrichter mit den Merkmalen des Oberbegriffs des Patentanspruchs 1 fließen. Über jeden Eingang eines Wechselrichters mit den Merkmalen des Oberbegriffs des Patentanspruchs 1 fließen typischerweise elektrische Leistungen von einigen Kilowatt bis hin zu einigen zehn Kilowatt und Ströme im Bereich zwischen 10A und 50A. Zudem umfasst die bekannte Schaltung keine für ein EMV-Filter typische Entstörkondensatoren gegen Erde.

Die Verwendung einer stromkompensierten Drossel mit insgesamt drei Wicklungen auf einem gemeinsamen Kern ist in EMV-Filtern für dreiphasige Wechselströme bekannt, wobei jeder Phase des Wechselstroms eine Drosselwicklung zugeordnet ist.

Aus der US 2010/0207560 A1 ist es bei einem Elektrofahrzeug bekannt, Leitungen P, C und N zwischen einem Wandler und einem Wechselrichter durch einen oder mehrere magnetische Ringkerne hindurchzuführen. Die Ringkerne sind Teil einer Schnittstelle zwischen dem einen Wandler und dem einen Wechselrichter. Auf beiden Seiten des bzw. der Ringkerne sind Glättungskondensatoren zwischen die Leitungen geschaltet. Mit dem bzw. den magnetischen Ringkernen wird die wirksame Resonanzfrequenz zu einer Frequenz verschoben, bei der keine Störungen z. B. von Signaleinrichtungen auftreten. Zugleich wird durch den oder die Ringkerne die Induktivität bei kritischen Frequenzen erhöht und so das Rauschen bei dieser Frequenz reduziert.

Aus der DE 100 19 461 A1 ist ein Entstörfilter bekannt, das einen wenigstens teilweise von einem Magnetkörper umschlossenen, eine Drossel- und Kondensatoranordnung bildenden Entstörfilterschaltungsstapel umfasst. In dem Stapel sind jeweils gegeneinander isoliert aufeinandergestapelte Entstörfilterschaltungen vorgesehen, von denen jede mehrere gegeneinander isolierte, aufeinander gestapelte LC-Verbundelemente enthält. Diese LC-Verbundelemente weisen ihrerseits je eine Hauptspule und eine Erdspule auf, die beide spiralförmig mit im Wesentlichen rechteckigem Querschnitt sind und unter Zwischenlage mehrerer rechteckiger dielektrischer Scheibchen aneinander befestigt sind. In jeder Entstörfilterschaltung sind die Hauptspulen der zugehörigen LC-Verbundelemente an ihren inneren Enden zur Bildung eines Hauptkreises elektrisch miteinander verbunden, während die Erdspulen der LC-Verbindungselemente an ihren inneren Enden zur Bildung eines Erdkreises elektrisch verbunden sind. Mit den Entstörfilterschaltungen wird ein Filter gebildet, das sich aus einer Gleichtaktdrosselspule und einem Massekondensator zur Verwendung als Filter zusammensetzt. Dabei können drei Entstörfilterschaltungen zusammengesetzt werden, um ein 3-Phasen-Filter zu schaffen. Wenn bei dem bekannten Entstörfilter von der jeweiligen Hauptspule ein Störsignal zur Erdspule übertragen wird, kann unter bestimmten Voraussetzungen eine Resonanz zwischen der Induktivität und der Kapazität auftreten und eine Störspannung erhöhen. Um das Auftreten einer solchen Resonanz zu vermeiden, wird ein Widerstand zwischen der Erdspule und einem Erdungsdraht vorgesehen. Alternativ kann die Erdspule selbst einen gewissen Widerstand aufweisen, was die Notwendigkeit eines gesonderten Widerstands beseitigt.

### AUFGABE DER ERFINDUNG

Der Erfindung liegt die Aufgabe zugrunde, einen Wechselrichter mit den Merkmalen des Oberbegriffs des unabhängigen Patentanspruchs 1 aufzuzeigen, der ein hinsichtlich seiner Masse und Wirksamkeit in allen Betriebszuständen eines Multistring-Wechselrichters optimiertes EMV-Filter aufweist.

### LÖSUNG

Die Aufgabe der Erfindung wird erfindungsgemäß mit den Merkmalen des unabhängigen Patentanspruchs 1 gelöst. Bevorzugte erfindungsgemäße Ausgestaltungen sind den abhängigen Patentansprüchen zu entnehmen. Der nebengeordnete Patentanspruch 15 ist auf eine ihrerseits erfindungsgemäße Verwendung eines erfindungsgemäßen Wechselrichters gerichtet.

### BESCHREIBUNG DER ERFINDUNG

Die Erfindung geht von einem Wechselrichter mit einem DC/AC-Wandler, einem Gleichspannungszwischenkreis auf der Gleichspannungseingangsseite des DC/AC-Wandlers, mehreren DC/DC-Wandlern, die ausgangsseitig parallel zueinander an den Gleichspannungszwischenkreis angeschlossen sind, mehreren zu jeweils einem der DC/DC-Wandler führenden Eingängen und einem zwischen die Eingänge und die DC/DC-Wandler geschalteten EMV-Filter aus, wobei das EMV-Filter Drosseln in allen stromtragenden Leitungen zwischen den Eingängen und den DC/DC-Wandlern und von allen stromtragenden Leitungen zwischen den Eingängen und den DC/DC-Wandlern nach Erde führende Filterkondensatoren umfasst. Erfindungsgemäß führt von mindestens zwei Eingängen - neben jeweils einer eigenen stromtragenden Leitung - eine gemeinsame stromtragende Leitung zu den beiden zugehörigen DC/DC-Wandlern, wobei die Drosseln in allen stromtragenden Leitungen von den mindestens zwei Eingängen durch Drosselwicklungen auf einem gemeinsamen Kern einer stromkompensierten Drossel gebildet sind.

Bei dem erfindungsgemäßen Wechselrichter mit mehreren Eingängen dient die Verwendung einer einzigen stromkompensierten Drossel mit n + 1 Drosselwicklungen für n Eingänge einerseits dazu, den Materialaufwand und damit auch den Kostenaufwand für die Drosseln in den stromtragenden Leitungen von den Eingängen insgesamt zu begrenzen. Andererseits wird mit der derart mehrfach stromkompensierten Drossel erreicht, dass bei gebrückten Eingängen infolge von Unsymmetrien der zugehörigen DC/DC-Wandler auftretende Umverteilungen der Rückströme zwischen den Eingängen keine unerwünschte Magnetisierung des Kerns der Drossel zur Folge haben, die seine Magnetisierbarkeit schnell ausschöpft. Alle Eingänge, die über die gemeinsame stromkompensierte Drossel an die zugehörigen DC/DC-Wandler angeschlossen sind, können vielmehr in beliebigen Teilmengen oder auch sämtlich gebrückt werden, ohne dass die Gefahr besteht, dass der Kern der gemeinsamen stromkompensierten Drossel bereits ohne zu dämpfende Störungen magnetisiert wird. Dies gilt auch dann, wenn, wie dies bei Multistring-Wechselrichtern üblich ist, ganz erhebliche elektrische Leistungen von mehreren Kilowatt bis hin zu einigen zehn Kilowatt und typischen Strömen zwischen 10A und 50A - bei der gemeinsamen stromtragenden Leitung sogar das n-Fache dieser Ströme - durch die einzelnen Drosselwicklungen fließen. Diese großen Leistungen bzw. die ihnen entsprechenden Gleichströme, die als Gegentaktströme durch die mehrfach stromkompensierte Drossel fließen, beeinträchtigen damit nicht die Funktion des EMV-Filters, das mit den Induktivitäten seiner Drosseln und den Kapazitäten seiner Filterkondensatoren auf die möglicherweise auftretenden Gleichtaktstörungen, insbesondere aus dem Bereich der DC/DC-Wandler und des DC/AC-Wandlers abgestimmt ist, um die geforderten EMV Grenzwerte einzuhalten.

Die Vorteile der einzigen stromkompensierten Drossel bei dem erfindungsgemäßen Wechselrichter werden nur erzielt, weil die Erfindung von dem Grundsatz abweicht, das für jeden Eingang, an den eine Stromquelle anschließbar ist, ein eigenes EMV-Filter vorgesehen werden muss, um unerwünschte Kopplungen der Eingänge und der für diese vorgesehenen Filterelemente zu verhindern. Durch die Kopplung der Filterelemente für die einzelnen Eingänge entstehen zusätzliche unerwünschte Resonanzfrequenzen. Die Kopplung der Eingänge ist besonders kritisch, wenn daran beispielsweise Photovoltaikgeneratoren angeschlossen werden, die wegen ihrer großen Flächen erhebliche Antennenwirkungen haben. Sie neigen daher in erheblichem Maße dazu, Störsignale einzufangen und auch abzustrahlen, was durch ihre Kopplung noch verstärkt wird. Die Erfindung beruht dabei auf der Erkenntnis, dass die Auswirkungen dieser Kopplungen auf ein unschädliches Maß begrenzt werden können, so dass die Vorteile der einzigen stromkompensierten Drossel bei dem erfindungsgemäßen Wechselrichter auch praktisch nutzbar sind.

Auch ausgehend von einer bekannten stromkompensierten Drossel für den Strom von zwei Schaltkreisen, die einen gemeinsamen Referenzstrompfad und jeweils einen eigenen Strompfad aufweisen, standen der vorliegenden Erfindung Hindernisse im Weg. Die bei diesem Ausgangspunkt zur Ausbildung eines EMV-Filters zu ergänzenden Entstörkapazitäten gegen Erde eröffnen Strompfade für unerwünschte höherfrequente Wechselströme zwischen den beiden Schaltkreisen, dass heißt hier den an die verschiedenen Eingänge des Wechselrichters angeschlossenen Stromquellen. Anders als bei einer einfachen Entstörmaßnahme auf rein induktiver Basis sind die Verhältnisse bei gleichzeitiger Existenz von Entstörkondensatoren daher deutlich komplexer.

Die grundsätzliche Komplexität des Einsatzes einer einzigen stromkompensierten Drossel bei dem erfindungsgemäßen Wechselrichter ist auch nicht mit bekannten Schaltungen vergleichbar, in denen mehr als zwei Leitungen zwischen immer nur zwei Endstellen durch eine stromkompensierte Drossel als Schnittstelle geführt werden. Diese Schaltungen entsprechen allenfalls der Betriebsart des erfindungsgemäßen Wechselrichters mit hart gekoppelten DC-Eingängen. Hingegen weist ein erfindungsgemäßer Wechselrichter ein wirkungsvolles EMV-Filter auch in seiner weiteren Betriebsart auf, nämlich dem üblichen Multistring-Betrieb eines Multistring-Wechselrichters. Bei diesem Multistring-Betrieb müssen mehrere Ströme zu bzw. von getrennten Stromquellen gefiltert werden.

Typische Induktivitäten der Drosseln des EMV-Filters des erfindungsgemäßen Wechselrichters liegen im Bereich von 0,2 mH bis 4,0 mH.

Die Drosselwicklung für die Drossel in der gemeinsamen stromtragenden Leitung der mindestens zwei Eingänge weist bei dem erfindungsgemäßen Wechselrichter vorzugsweise einen n-mal größeren Leitungsquerschnitt auf als die Drosselwicklungen für jede Drossel in einer der eigenen stromtragenden Leitungen der mindestens zwei Eingänge. Hierbei ist n die Anzahl der mindestens zwei Eingänge. Die Stromdichte über die Leitungsquerschnitte der verschiedenen Drosselwicklungen ist damit zumindest in etwa gleich. Dies schließt nicht aus, dass im Betrieb des Wechselrichters auch stark unterschiedliche Ströme durch die einzelnen eigenen stromtragenden Leitungen der mindestens zwei Eingänge fließen und entsprechend unterschiedliche Stromdichten auftreten können, insbesondere wenn die jeweiligen Eingänge nicht gebrückt sind.

Der n-mal größere Leitungsquerschnitt der Drosselwicklung für die Drossel in der gemeinsamen stromtragenden Leitung kann der Leitungsquerschnitt eines einzelnen Drahtleiters oder auch der gemeinsame Leitungsquerschnitt mehrerer parallel geführter Drahtleiter sein. Letzteres kann das Ausbilden kleiner Radien beim Bewickeln des Kerns erleichtern.

Vorzugsweise ist der gemeinsame Kern der stromkompensierten Drossel des erfindungsgemäßen Wechselrichters symmetrisch mit den Drosselwicklungen bewickelt. Dies bedeutet, dass alle Drosselwicklungen für die Drosseln in den eigenen stromtragenden Leitungen der einzelnen Eingänge in möglichst gleichen Relativanordnungen mit gleicher magnetischer Kopplung zu der Drosselwicklung der Drossel in der gemeinsamen stromtragenden Leitungen der mindestens zwei Eingänge angeordnet sind. Dies ist Voraussetzung für die angestrebte vollständige Stromkompensation in Bezug auf beliebige Gegentaktströme durch die stromkompensierte Drossel.

Wenn die Anzahl der Eingänge zwei ist, kann der Kern ein Ringkern sein, auf den die Drosselwicklungen für jede Drossel in einer der eigenen stromtragenden Leitungen symmetrisch zu der Drosselwicklung für die Drossel in der gemeinsamen stromtragenden Leitung gewickelt sind.

Der Ringkern kann dabei sowohl rund als auch oval sein. Um auch bei mehr als zwei Eingängen und entsprechend vielen Drosseln in einer eigenen stromtragenden Leitung eine solche Symmetrie der Drosseln zu erreichen, können auch anderer Kernformen Verwendung finden, wie z. B. ein Kern mit einem zentralen Steg, auf den die Drosselwicklung für die Drossel in der gemeinsamen stromtragenden Leitung gewickelt ist, und mehreren kreisförmig angeordneten Nebenstegen, auf denen jeweils eine Drosselwicklung für eine Drossel in einer der eigenen stromtragenden Leitungen gewickelt ist.

Der gemeinsame Kern der stromkompensierten Drossel des erfindungsgemäßen Wechselrichters ist in der Regel ungeschlitzt, um bezogen auf die Masse des Kerns eine möglichst hohe Induktivität der einzelnen Drosseln zu realisieren.

Bei dem EMV-Filter des erfindungsgemäßen Wechselrichters sind zumindest Filterkondensatoren vorgesehen, die zwischen den Drosseln und den DC/DC-Wandlern an die stromtragenden Leitungen angeschlossen sind und von dort nach Erde führen. Diese Filterkondensatoren sind dabei in einer für EMV-Filter unüblichen aber hier bevorzugten Weise mit in Reihe geschalteten Widerständen bedämpft. Grundsätzlich wird von einer Bedämpfung von Filterkondensatoren Abstand genommen, da hierdurch ihre Filtereffektivität eingeschränkt wird. Bei einem erfindungsgemäßen Wechselrichter ist eine Bedämpfung der Filterkondensatoren jedoch vielfach notwendige Voraussetzung für die Funktion des EMV-Filters, d. h. für die Sicherstellung der elektromagnetischen Verträglichkeit des Wechselrichters. Dies liegt daran, dass bei der mehrfach stromkompensierten Drossel des erfindungsgemäßen Wechselrichters aus parasitären Streufeldern und damit verbundenen Verkopplungen der einzelnen Drosseln ungewünschte Resonanzen resultieren können. Diese Resonanzen können die elektromagnetische Verträglichkeit des erfindungsgemäßen Wechselrichters in Frage stellen. Durch die Serienbedämpfung der Filterkondensatoren werden sie jedoch bedämpft und effektiv unterdrückt. So werden die normalerweise für die Funktion eines EMV-Filters kontraproduktiven, die Filterkapazitäten des EMV-Filters bedämpfenden ohmschen Widerstände bei der vorliegenden Erfindung gezielt zur Unterdrückung von Resonanzen eingesetzt, die sonst vielfach dazu führen würden, dass eine mehrfach stromkompensierte Drossel - trotz ihrer Vorteile bei gebrückten Eingängen eines Multistring-Wechselrichters - wegen nicht erreichbarer elektromagnetischer Verträglichkeit des Wechselrichters nicht einsetzbar wäre.

So notwendig die mit den Filterkondensatoren in Reihe geschalteten Widerstände bei dem erfindungsgemäßen Wechselrichter in aller Regel sind, so ist es doch wichtig, sie für das Sicherstellen der grundsätzlichen Funktion des EMV-Filters klein zu halten. Typischerweise wird eine optimale Funktion erreicht, wenn die Widerstände bei Kapazitäten der Filterkondensatoren von typischerweise mindestens 47 nF einen ohmschen Widerstand von 0,5 bis 10,0 Ohm, häufig von 1 bis 5 Ohm, aufweisen.

Das EMV-Filter des erfindungsgemäßen Wechselrichters kann auch noch weitere Filterkondensatoren aufweisen. So können weitere Filterkondensatoren zwischen den Eingängen und den Drosseln von den stromtragenden Leitungen nach Erde führen. Diese weiteren Filterkondensatoren haben dann regelmäßig eine kleinere Kapazität als die zwischen den Drosseln und den DC/DC-Wandlern nach Erde führenden Filterkondensatoren. Zudem sind sie unbedämpft. Die weiteren Filterkondensatoren können konkret Kapazitäten von 0,2 bis 33 nF aufweisen und sind dabei maximal nur etwa ½ mal so groß und häufig maximal nur 1/10 mal so groß, sowie oft auch nur 1/20 mal so groß wie die Filterkondensatoren auf der anderen Seite der Drosseln.

Noch weitere Filterkondensatoren kann das EMV-Filter zwischen den beiden stromführenden Leitungen jedes Eingangs aufweisen, und zwar sowohl vor als auch hinter den Drosseln in diesen Leitungen. Diese zusätzlichen Filterkondensatoren haben primär eine Filterwirkung auf Gegentaktstörungen zwischen den stromführenden Leitungen.

Wenn bei dem erfindungsgemäßen Wechselrichter Eingänge, die über eine gemeinsame mehrfach stromkompensierte Drossel an die zugehörigen DC/DC-Wandler angeschlossen sind, gebrückt sind, erweist es sich für das Einhalten der gewünschten elektromagnetischen Verträglichkeit des Wechselrichters als hilfreich, wenn die entsprechenden DC/DC-Wandler synchron angesteuert werden. Auf diese Weise wird vermieden, dass hochfrequente (parasitäre) Ausgleichsströme zwischen den einzelnen DC/DC-Wandlern hin und her fließen. Diese Ausgleichsströme würden sonst die Schaltvorgänge in den DC/DC-Wandlern stören, und gestörte Schaltvorgänge enthalten typischerweise nicht nur mehr, sondern insbesondere stärker störende Spektralanteile, für die ggf. ein zusätzliches Filter vorzusehen wäre. Durch synchrone Taktung der Schalter der jeweiligen DC/DC-Wandler kann die Notwendigkeit eines solchen zusätzlichen Filters vermieden werden. Für diese synchrone Taktung kann eine Steuerung des erfindungsgemäßen Wechselrichters gezielt ausgelegt sein.

Grundsätzlich werden mehrere parallel geschaltete DC/DC-Wandler eines Wechselrichters vorzugsweise versetzt getaktet, um einen Stromrippel eines von ihnen gemeinsam ausgegebenen Stroms zu reduzieren. Bei einem erfindungsgemäßen Wechselrichter wird hiervon bewusst Abstand genommen und ein größerer Stromrippel akzeptiert, um die Vorteile der einzigen stromkompensierten Drossel ohne Beeinträchtigungen bei der Funktion des EMV-Filters nutzen zu können.

Der gemeinsame Kern der stromkompensierten Drossel wird innerhalb eines Gehäuses des Wechselrichters vorzugsweise hochkant ausgerichtet, um eine Kühlung, insbesondere eine Konvektionskühlung der Drosseln zu erleichtern. Dabei ist es sinnvoll die Drosselwicklung für die Drossel in der gemeinsamen stromtragenden Leitung im Vergleich zu den Drosselwicklungen für jede Drossel in einer der eigenen stromtragenden Leitungen an einer Stelle anzuordnen, die einem Kühlluftstrom für die stromkompensierte Drossel leichter zugänglich ist, weil sich im Betrieb des erfindungsgemäßen Wechselrichters der wärmste Punkt der stromkompensierten Drossel im Bereich dieser Drosselwicklung ausbildet.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Die Erfindung wird im Folgenden unter Bezugnahme auf die beigefügten Zeichnungen näher erläutert und beschrieben.
- **Fig. 1**: ist ein schematischer Schaltplan einer ersten Ausführungsform eines erfindungsgemäßen Wechselrichters mit zwei eingangsseitig angeschlossenen Photovoltaikgeneratoren und einem ausgangsseitig angeschlossenen Wechselstromnetz.
- **Fig. 2**: zeigt separat und schematisch eine mehrfach stromkompensierte Drossel mit drei Drosselwicklungen auf einem gemeinsamen Kern zur Erläuterung des Auftretens von Resonanzen aufgrund unsymmetrischer Streufelder um die einzelnen Drosselwicklungen.
- **Fig. 3**: illustriert eine EMV-Messung an einem Fig. 1 entsprechenden Wechselrichter, bei dem nur an einen Eingang ein Photovoltaikgenerator angeschlossen ist; und
- **Fig. 4**: zeigt eine weitere Ausführungsform eines Wechselrichters mit drei Eingängen und drei daran angeschlossenen Photovoltaikgeneratoren.

### FIGURENBESCHREIBUNG

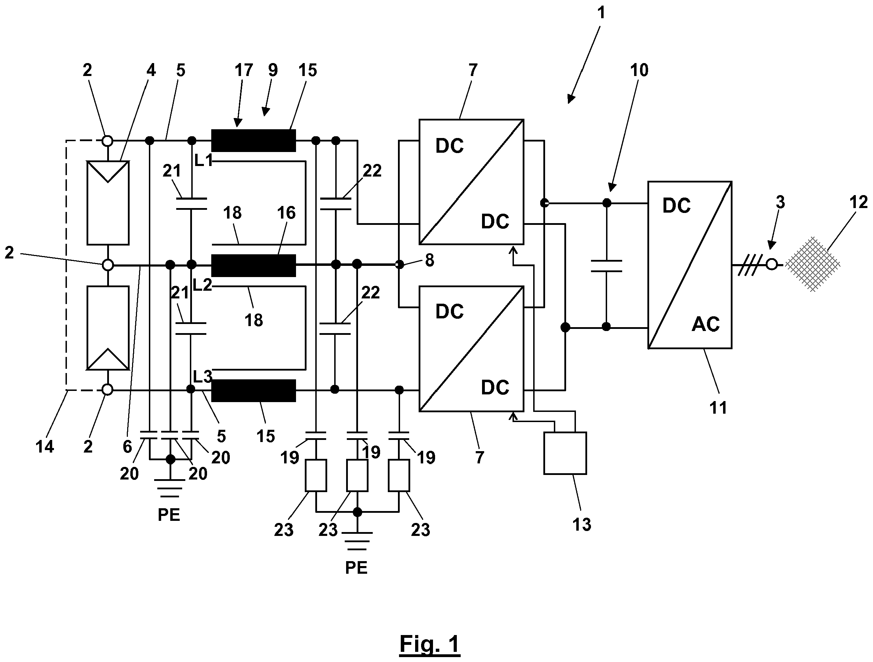

**Fig. 1** illustriert einen Wechselrichter 1 mit zwei Eingängen 2 und einem Ausgang 3. Die Eingänge 2 befinden sich auf einer Gleichspannungseingangsseite des Wechselrichters 1 und sind zum Anschluss von Gleichstromquellen vorgesehen. In Fig. 1 ist an jeden der Eingänge 2 ein Photovoltaikgenerator 4 angeschlossen. Von jedem Eingang 2 verlaufen zwei stromtragende Leitungen 5 und 6 zu einem diesem Eingang 2 zugeordneten DC/DC-Wandler 7. Dabei sind die stromtragenden Leitungen 5 eigene stromtragende Leitungen des jeweiligen Eingangs 2, während die stromtragende Leitung 6 von allen Eingängen 2 gemeinsam zu allen DC/DC-Wandlern 7 verläuft und sich erst an einem Punkt 8 hinter einem EMV-Filter 9 zu den einzelnen DC/DC-Wandlern 7 verzweigt. Das EMV-Filter 9 ist zwischen den Eingängen 2 und den DC/DC-Wandlern 7 für alle stromtragenden Leitungen 5 und 6 vorgesehen und wird im nächsten Absatz detailliert beschrieben werden. Die DC/DC-Wandler 7 sind ausgangsseitig parallel an einen Gleichspannungszwischenkreis 10 auf der Eingangsseite eines DC/AC-Wandlers 11 angeschlossen. Der DC/AC-Wandler 11 ist seinerseits - optional unter (hier nicht dargestellter) Zwischenschaltung von einem oder mehreren weiteren Filtern, Transformatoren, Schützen und dergleichen - an den Ausgang 3 angeschlossen. Über den Ausgang 3 speist der Wechselrichter 1 elektrische Energie von den Photovoltaikgeneratoren 4 in ein Wechselstromnetz 12 ein. In Fig. 1 ist ein 3-phasiger DC/AC-Wandler 11 dargestellt, dessen Ausgang 3 elektrische Leistung in die 3-Phasen eines Wechselstromnetzes 12 einspeist. Die Erfindung ist jedoch auch auf Wechselrichter 1 mit 1-phasigem DC/AC-Wandler 11 anwendbar. Um die in das Wechselstromnetz 12 eingespeiste elektrische Energie zu maximieren, kann mit dem Wechselrichter 1 ein unabhängiges MPP (Maximum Power Point)-Tracking für jeden einzelnen Photovoltaikgenerator 4 durchgeführt werden. Dazu werden die DC/DC-Wandler 7 von einer Steuerung 13 so angesteuert, dass die Photovoltaikgeneratoren 4 bei optimaler Spannung betrieben werden. In der Folge können unterschiedliche Spannungen über den beiden Eingängen 2 anliegen. Aufgrund der Möglichkeit dieses getrennten Betriebs der DC/DC-Wandler 7 handelt es sich bei dem Wechselrichter 1 um einen sogenannten Multistring-Wechselrichter. Die beiden Eingänge 2 können aber auch außerhalb des Wechselrichters 1 oder innerhalb desselben gebrückt. d. h. hart gekoppelt, sein, was durch eine mit gestrichelter Linie dargestellte optionale elektrische Verbindung 14 angedeutet ist. Dann sind die beiden DC/DC-Wandler 7 nicht nur ausgangsseitig parallel an den Gleichspannungszwischenkreis 10, sondern auch eingangsseitig parallel an die gebrückten Eingänge 2 angeschlossen. In diesem Fall steuert die Steuerung 13 die DC/DC-Wandler 7 synchron an und symmetriert idealerweise die über die beiden DC/DC-Wandler 7 fließenden Ströme, um eine gleichmäßige Auslastung und damit auch gleichmäßige Belastung zu erreichen. Dennoch kann es - allein aufgrund von unvermeidbaren Bauteilunsymmetrien - dazu kommen, dass ein über eine der Leitungen 5 zu einem der DC/DC-Wandler 7 vorfließender Strom über den anderen DC/DC-Wandler 7 an den Punkt 8 zurückfließt. Da beide DC/DC-Wandler 7 an dem Punkt 8 jedoch miteinander und mit der stromtragenden Leitung 6 verbunden sind, wirkt sich diese Unsymmetrie im Bereich des EMV-Filters 9 nicht aus.

Das EMV-Filter 9 weist Drosseln 15 und 16 in den stromtragenden Leitungen 5 und 6 auf. Auf diese Drosseln 15 und 16 wird im Folgenden auch mit den durch sie bereitgestellten Induktivitäten L1, L2 und L3 Bezug genommen. Die Drosseln 15 und 16 sind so magnetisch gekoppelt, dass sie zusammen eine mehrfach stromkompensierte Drossel 17 ausbilden. Das heißt, die Magnetisierung eines gemeinsamen Kerns 18 der mehrfach stromkompensierten Drossel 17 infolge des vorwärts fließenden Stroms durch die Drosseln 15 wird durch den rückwärts fließenden Strom durch die Drossel 16 kompensiert. Als Gegentaktströme von den Photovoltaikgeneratoren 4 durch die stromkompensierte Drossel 17 fließende Leistungsgleichströme beanspruchen damit die Magnetisierbarkeit des Kerns 18 nicht, ganz anders als mit dem EMV-Filter 9 zu bedämpfende Gleichtaktstörungen, insbesondere aus dem Bereich der DC/DC-Wandler 7 und des DC/AC-Wandlers 11.

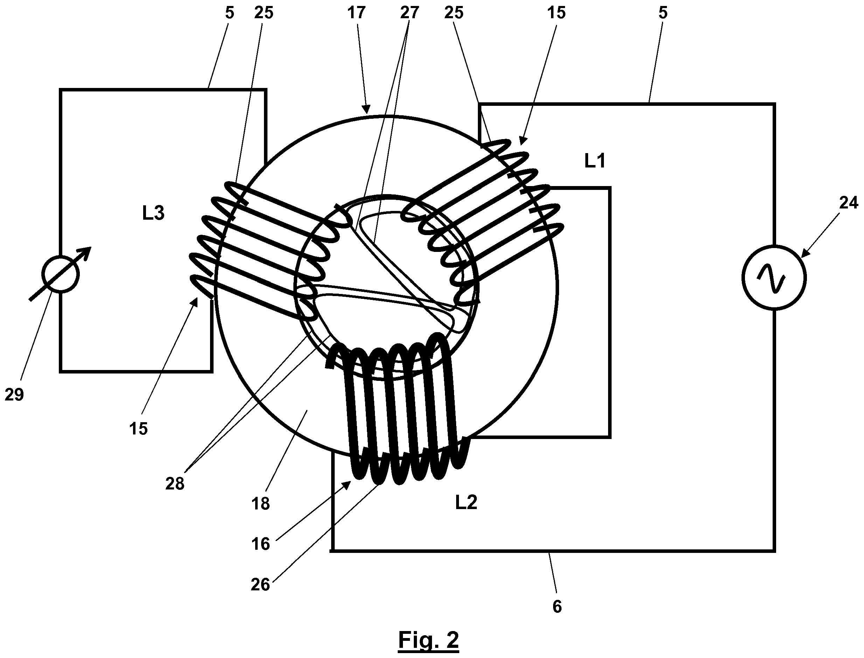

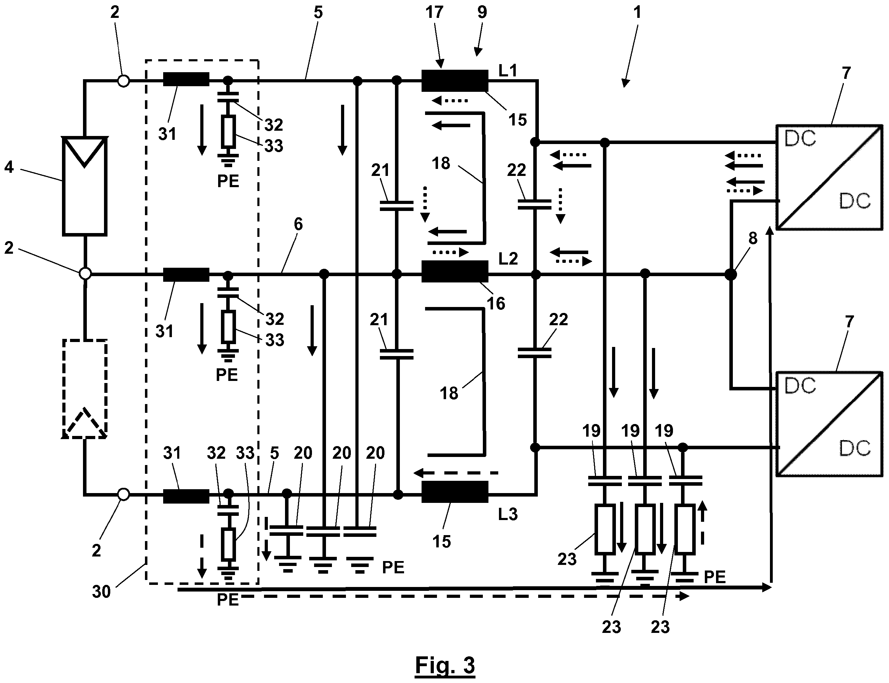

Neben der Drossel 17 weist das EMV-Filter 9 Filterkondensatoren 19 bis 22 auf. Die Filterkondensatoren 19 sind in Abzweigen von den stromtragenden Leitungen 5 und 6 zwischen der Drossel 17 und den DC/DC-Wandlern 7 nach Potentialerde PE (oder kurz Erde) vorgesehen. Dabei sind diese Filterkondensatoren 19 mit Widerständen 23 in Reihe geschaltet. Die Filterkondensatoren 19 sind damit zwar in einer für EMV-Filter üblichen Anordnung vorgesehen. Ihre Serienbedämpfung mit den Widerständen 23 ist aber eher ungewöhnlich, auch wenn die Widerstände 23 jeweils nur einen geringen ohmschen Widerstand von wenigen Ohm aufweisen. Auf die Bedeutung der Widerstände 23 wird im Zusammenhang mit den Fig. 2 und 3 näher eingegangen werden. Auch die Filterkondensatoren 20 führen von den stromtragenden Leitungen 5 und 6 nach Erde PE. Sie sind jedoch eingangsseitig der Drossel 17, d. h. zwischen dieser und den Eingängen 2 vorgesehen. Zudem beträgt die elektrische Kapazität der Filterkondensatoren 20 typischerweise nur ein Zehntel oder weniger der elektrischen Kapazität der Filterkondensatoren 19. Die Filterkondensatoren 21 sind eingangsseitig der Drossel 17 und die Filterkondensatoren 22 sind ausgangsseitig der Drossel 17 zwischen die stromtragenden Leitungen 5 und 6 geschaltet. Bis auf die Widerstände 23 ist die gesamte Anordnung der Filterkondensatoren 19 bis 22 des EMV-Filters 9 nicht grundsätzlich ungewöhnlich. Die Anordnung der Filterkondensatoren 19 bis 22 ist hier aber auf die gemeinsame stromtragende Leitung 6 für die beiden Eingänge 2 abgestimmt. Ungewöhnlich ist jedoch neben der mehrfach stromkompensierten Drossel 17 mit der Drossel 16 in der gemeinsamen stromtragenden Leitung 6 die Serienbedämpfung der Filterkondensatoren 19 mit den Widerständen 23.

**Fig.** 2 zeigt eine konkretisierte Ausführungsform der stromkompensierten Drossel 17 mit Drosselwicklungen 25 und 26 zur Ausbildung der Drosseln 15 und 16 in den stromtragenden Leitungen 5 und 6 auf dem gemeinsamen Kern 18. Fig. 2 deutet mit einer dickeren Linie zur Darstellung der Drosselwicklung 26 an, dass diese einen doppelt so großen Leitungsquerschnitt wie die Drosselwicklungen 25 aufweist. Dies trägt der Tatsache Rechnung, dass die Summe des durch die beiden Drosselwicklungen 25 vorfließenden Stroms durch die Drosselwicklung 26 zurückfließt. Der Kern 18 besteht aus einem magnetisierbaren Material, wie bspw. einem nanokristallinen ferromagnetischen Blech, das zu einem Bandkern aufgewickelt ist, oder einem ferrimagnetischen Material, und ist ungeschlitzt. Wenn ein Störsignal 24 ausgangsseitig in die in Reihe geschalteten Induktivitäten L1 und L2 eingekoppelt wird, erzeugt das hochfrequente Störsignal 24 sich zeitlich ändernde Streufelder, die in Fig. 2 durch Feldlinien 27 und 28 angedeutet sind. Diese Streufelder treten aus den Drosselwicklungen 25 und 26 der Induktivitäten L1 und L2 aus und durchsetzen die Drosselwicklung 25 der Seitendrossel 15 mit der Induktivität L3. Da die Streufelder bereits aufgrund geringster Unterschiede in den Wickelgeometrien nie vollständig identisch sind, wird in Folge der asymmetrischen Verhältnisse eine hochfrequente (HF) Spannung in der Induktivität L3 induziert, die von einem an die Induktivität L3 angeschlossenen hochohmigen Spannungsmessgerät 29, beispielsweise einem Oszilloskop, angezeigt wird. Diese Gegeninduktion findet grundsätzlich immer statt, d. h. auch dann, wenn an die Induktivität L3 selbst eine HF-Spannungsquelle angeschlossen ist. In diesem Fall überlagern sich die durch diese weitere Spannungsquelle angelegte und die durch die Gegeninduktion hervorgerufene Spannung nach dem Superpositionsprinzip additiv.

In Fig. 2 ist die Drosselwicklung 26 in Form eines einadrigen dicken Drahtleiters dargestellt, der in seinem Leitungsquerschnitt der Summe der Leitungsquerschnitte der beiden Drosselwicklungen 25 entspricht. Es ist jedoch auch möglich, den entsprechend größeren Leitungsquerschnitt in Form mehrerer, innerhalb der Drosselwicklung 26 parallel gewickelter Drahtleiter zu realisieren. Hierdurch können zwar parasitäre Resonanzeffekte der beiden parallel gewickelten Drahtleiter untereinander generiert werden, die zusätzliche EMV Störsignale bzw. auch Störfrequenzen erzeugen können. Dennoch kann je nach Anwendungsfall eine derartige Unterteilung zum Beispiel im Hinblick auf die Umsetzung engerer Biegeradien vorteilhaft sein.

Für dreiphasige Wechselströme sind stromkompensierte Drosseln mit drei gleichen Drosselwicklungen auf einem gemeinsamen ringförmigen Kern bekannt. Diese stromkompensierten Drosseln werden aus Gründen der besseren Kühlung oftmals hochkant in einem Gehäuse montiert. Diese Orientierung im Gehäuse erlaubt einen besseren und großflächigeren Kontakt mit einem - entweder separat angetriebenen oder sich infolge der Wärmeunterschiede selbst einstellenden - Kühlluftstrom. Für den vorliegenden Fall einer Drossel 17 mit mehreren separaten Drosselwicklungen 25 und einer Drosselwicklung 26 mit dickerem Leitungsquerschnitt hat sich gezeigt, dass die wärmste Stelle der Drossel 17 im Betrieb des EMV-Filters 9 im Bereich der Drosselwicklung 26 liegt. Dies resultiert hauptsächlich daraus, dass aufgrund von sogenannten "Proximity-Effekten" (z. B. Skin-Effekt) die Stromdichte in dem Drahtleiter nicht homogen ist, sondern sich zunehmend auf den Randbereich des Drahtleiters konzentriert. Diese inhomogene Stromverteilung führt bei einem einadrigen Leiter mit n-fachem Querschnitt zu etwas höheren ohmschen Verlusten, als dies bei n Leitern mit einfachem Querschnitt der Fall ist. Aus diesem Grund ist es vorteilhaft, gerade den Bereich der Drosselwicklung 26 besonders gut zu kühlen. Es ist daher bei hochkantiger (d. h. stehender) Orientierung der Drossel 17 im Wechselrichter vorteilhaft, wenn die Drosselwicklung 26 im Vergleich zu den Drosselwicklungen 25 an einer dem Luftstrom besonders gut ausgesetzten Stelle angeordnet ist - in der Regel ist dies der obere Bereich der Drossel 17, wobei die Drosselwicklungen 25 dann seitlich nach unten gerichtet sind. Auf diese Weise befindet sich der thermisch kritischere Bereich (Hot-Spot) der Drossel 17 in besserem Kontakt mit dem Kühlluftstrom als die weiter unten befindlichen, thermisch unkritischeren Drosselwicklungen 25, die an dieser Stelle eventuell durch andere Komponenten teilweise von dem Kühlluftstrom abgeschirmt werden.

Fig. 3 illustriert die Auswirkungen der asymmetrischen Streufelder gemäß Fig. 2 auf die EMV-Verträglichkeit des Wechselrichters 1 gemäß Fig. 1. Der Wechselrichter 1 ist hier nur von den Eingängen 2 bis zu den DC/DC-Wandlern 7 dargestellt. Zusätzlich dargestellt ist in Fig. 3 jedoch eine EMV-Messanordnung 30 mit zugehörigen Drosseln 31 in den stromtragenden Leitungen 5 und 6, zugehörigen Kondensatoren 32, die von den stromtragenden Leitungen 5 und 6 nach Erde PE führen und Messwiderständen 33, um die über die Kondensatoren 32 nach Erde PE fließenden Ströme als Spannungsabfall zu messen. Eine solche Messanordnung mit normierten Induktivitäten der Drosseln 31, Kapazitäten der Kondensatoren 32 und ohmschen Widerständen der Messwiderstände 33 ist bei Typenprüfungen zur elektromagnetischen Verträglichkeit (EMV) solcher Wechselrichter vorgeschrieben, wie sie Gegenstand der vorliegenden Erfindung sind. Diese Messanordnung und ihre Dimensionierung wird beispielsweise in den für die Durchführung einer EMV Prüfung relevanten Normen definiert. Durch die Messanordnung 30 werden definierte Rahmenbedingungen geschaffen, um eine Vergleichbarkeit verschiedener EMV-Messungen, die im Allgemeinen auch an unterschiedlichen Gerätetypen durchgeführt werden, zu gewährleisten. Die EMV-Messanordnung 30 ist demnach zur Durchführung der EMV-Prüfung, nicht aber für den normalen Betrieb des Wechselrichters 1 erforderlich.

Zur einfacheren Erläuterung der Auswirkungen der asymmetrischen Streufelder ist in Fig. 3 ein Fall dargestellt und wird im Folgenden betrachtet, in dem nur an den oberen Eingang 2 ein Photovoltaikgenerator 4 angeschlossen ist, während der andere Eingang 2 offen ist. Obwohl die folgende Erklärung für diesen Spezialfall erfolgt, lassen sich die auftretenden Effekte aufgrund des Superpositionsprinzips der durch die Streufelder induzierten Spannungen auch auf die anderen Betriebsmodi des Wechselrichters 1 übertragen. Des Weiteren sei nur der obere DC/DC-Wandler 7 aktiviert, während der untere DC/DC-Wandler 7 deaktiviert bleibt. Der aktivierte DC/DC-Wandler kann dann aufgrund seiner hochfrequenten Schalthandlungen als Störgenerator für hochfrequente Störsignale und einen damit verbundenen hochfrequenten Störstrom betrachtet werden. Dieser Störstrom sei zunächst als reiner Gegentaktstörstrom vorausgesetzt. Dieser Gegentaktstörstrom "sieht" die Induktivitäten L1 und L2 der Drossel 17 nicht und fließt, wie durch Pfeile mit punktierter Linie angezeigt ist, im DC-Kreis durch das EMV-Filter 9. Über den den Induktivitäten L1 und L2 zugeordneten Messwiderständen 33 der EMV-Messanordnung 30 fallen dabei keine Spannungen ab, und es ist entsprechend kein EMV-relevantes Signal zu detektieren. Allerdings wird an dem der Induktivität L3, d. h. der eigenen stromtragenden Leitung 5 des offenen Eingangs 2 zugeordnetem Messwiderstand 33 ein HF-Störsignal gemessen. Dieses resultiert aus der gemäß Fig. 2 in L3 induzierten Spannung. Der entsprechende HF-Störstrom, dessen Weg durch Pfeile mit gestrichelter Linie angezeigt ist, fließt gegen Erde PE und über den groß dimensionierten Filterkondensator 19 zurück zur Induktivität L3. Betrachtet man den Stromkreis über die Filterkondensatoren 20 links der Drossel 17 als geschlossen, so stellt dies einen Resonanzkreis dar, der den Störstrom durch die Messanordnung 30 bestimmt. Damit die Resonanz in diesem Resonanzkreis keine zu große Güte erreicht, sind die Widerstände 23 vorgesehen. Diese reduzieren den HF-Störstrom und damit auch das hieraus resultierende EMV-Störsignal. Das Vorsehen der Widerstände 23 in Reihe mit allen Filterkondensatoren 19 hat dabei nicht nur Symmetriegründe, sondern berücksichtigt auch komplexere Kopplungen zwischen den Induktivitäten L1, L2 und L3 von potentiell auftretenden Störungen.

Im Allgemeinen ist ein Störstrom aus Gegentakt- und Gleichtaktanteilen zusammengesetzt. Das Verhalten des EMV-Filters 9 bei Gleichtaktströmen ist für den vorliegenden Spezialfall in Fig. 3 durch Pfeile mit durchgezogener Linie illustriert. Im Gegensatz zu einem Gegentaktstrom gemäß den gestrichelten Pfeilen "sieht" der Gleichtaktstrom die Induktivitäten L1 und L2 und wird durch diese abgeschwächt. Vor den Drosseln 15 und 16 sind die größeren Filterkondensatoren 19 nach Erde angeschlossen, um den Störungen einen gewünscht kurzen Rückpfad zu ihrer Quelle zu bieten, damit die Störungen lokal begrenzt bleiben. Die nach den Induktivitäten L1, L2 noch vorhandenen Gleichtaktströme fließen anteilig über den oberen und mittleren Filterkondensator 20 und den oberen und mittleren Kondensator 32 sowie die damit in Reihe geschalteten Messwiderstände 33 der EMV-Messanordnung 30 gegen Erde PE und bestimmen so das dort gemessene EMV-Störsignal. Auch bei den Gleichtaktströmen wird aufgrund der Asymmetrie der Streufelder eine Spannung in der Induktivität L3 der unteren Drossel 15 hervorgerufen, die einen mit gestrichelten Pfeilen angezeigten Störstrom über PE und den zugehörigen Filterkondensator 19 treibt. Auch in diesem Fall wird die Höhe der Störströme durch den in Reihe geschalteten Widerstand 23 reduziert.

Für den Teil des HF-Störstroms, der unmittelbar am Ausgang des DC/DC-Wandlers über die großen Filterkondensatoren 19 zur lokalen Begrenzung der Störung gegen PE abgeführt wird, wirken die Widerstände 23 zwar kontraproduktiv, da dieser unmittelbar abgeführte Störstromanteil abgeschwächt wird. Wenn jedoch die Widerstände 19 klein dimensioniert bleiben, kann ein guter Kompromiss zwischen den beiden einander entgegenwirkenden Zielen erreicht werden:
- möglichst gute Auskopplung des HF-Störsignals direkt an den DC/DC-Wandlern, die als Störsignalgeneratoren wirken,
- möglichst gute Dämpfung der danach noch vorhandenen, d. h. nicht sofort ausgekoppelten Störströme und der durch diese induzierten Störströme.
Zudem sorgt die synchrone Taktung der DC/DC-Wandler 7 bei gebrückten Eingängen 2 für ein nahezu gleiches Störspektrum wie beim unabhängigen Betrieb der beiden DC/DC-Wandler 7 ohne Brückung der Eingänge, so dass die Abstimmung des EMV-Filters vereinfacht ist. Weiterhin wird durch die synchrone Taktung ein gutes Wärmemanagement in dem Wechselrichter 1 erreicht und das Fließen von Querströmen verhindert.

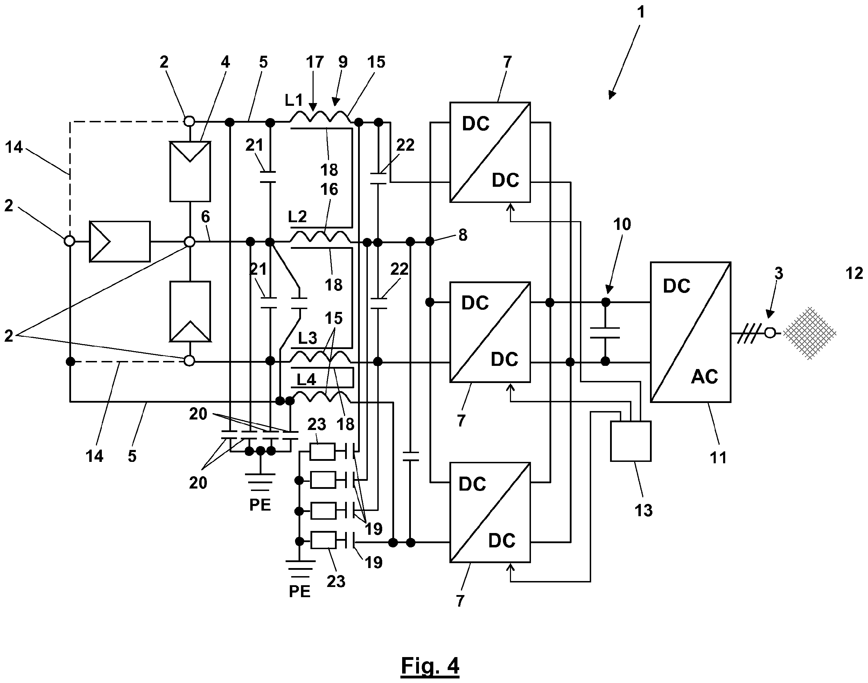

**Fig. 4** illustriert eine Ausführungsform des Wechselrichters 1, bei der drei Eingänge 2 und entsprechend drei DC/DC-Wandler 7 vorgesehen sind. Von diesen drei Eingängen 2 führen insgesamt drei eigene stromtragende Leitungen 5 und eine gemeinsame stromtragende Leitung 6 durch die mehrfach stromkompensierte Drossel 17. Dabei ist die Drosselwicklung für die Drossel 16 hier von dreimal so großem Leitungsquerschnitt wie die Drosselwicklungen für die Drosseln 15. Bei dem Wechselrichter 1 gemäß Fig. 4 können zwei der Eingänge 2, aber auch alle drei Eingänge 2 gebrückt sein, wie durch zwei gestrichelte Linien 14 angedeutet ist. Ansonsten entspricht nicht nur der Aufbau, sondern auch die Funktion des Wechselrichters 1 gemäß Fig. 4 derjenigen des Wechselrichters 1 der bisherigen Figuren.

### BEZUGSZEICHENLISTE

- 1: Wechselrichter
- 2: Eingang
- 3: Ausgang
- 4: Photovoltaikgenerator
- 5: Leitung
- 6: Leitung
- 7: DC/DC-Wandler
- 8: Punkt
- 9: EMV-Filter
- 10: Gleichspannungszwischenkreis
- 11: DC/AC-Wandler
- 12: Wechselstromnetz
- 13: Steuerung
- 14: optionale elektrische Verbindung
- 15: Drossel
- 16: Drossel
- 17: stromkompensierte Drossel
- 18: Kern
- 19: Filterkondensator
- 20: Filterkondensator
- 21: Filterkondensator
- 22: Filterkondensator
- 23: Widerstand
- 24: HF-Störsignal
- 25: Drosselwicklung
- 26: Drosselwicklung
- 27: Streufeld
- 28: Streufeld
- 29: Spannungsmessgerät
- 30: Messanordnung
- 31: Drossel
- 32: Kondensator
- 33: Messwiderstand
- PE: Potentialerde
- L1: Induktivität
- L2: Induktivität
- L3: Induktivität

## Patentansprüche

1. Wechselrichter (1) mit:
- einem DC/AC-Wandler (11),
- einem Gleichspannungszwischenkreis (10) auf der Gleichspannungseingangsseite des DC/AC-Wandlers (11),
- mehreren DC/DC-Wandlern (7), die ausgangsseitig parallel zueinander an den Gleichspannungszwischenkreis (10) angeschlossen sind,
- mehreren zu jeweils einem der DC/DC-Wandler (7) führenden Eingängen (2) und
- einem zwischen die Eingänge (2) und die DC/DC-Wandler geschalteten EMV-Filter (9),
- wobei das EMV-Filter (9)
- Drosseln (15, 16) in allen stromtragenden Leitungen (5, 6) zwischen den Eingängen (2) und den DC/DC-Wandlern (7) und
- von allen stromtragenden Leitungen (5, 6) zwischen den Eingängen (2) und den DC/DC-Wandlern (7) nach Erde führende Filterkondensatoren (19, 20)
umfasst,
wobei von mindestens zwei Eingängen (2) - neben jeweils einer eigenen stromtragenden Leitung (5) - eine gemeinsame stromtragende Leitung (6) zu den beiden zugehörigen DC/DC-Wandlern (7) führt und der Wechselrichter (1) dazu eingerichtet ist, in einer ersten Konfiguration, in der die mindestens zwei Eingänge (2) durch harte Kopplung ihrer eigenen stromführenden Leitungen (5) parallel geschaltet sind, und in einer zweiten Konfiguration betreibbar zu sein, in der diese Kopplung nicht vorliegt,
**dadurch gekennzeichnet,**
- **dass** eine Steuerung (13) vorgesehen ist, die die Schalter der zugehörigen DC/DC-Wandler (7) synchron ansteuert, wenn die mindestens zwei Eingänge (2) durch harte Kopplung ihrer eigenen stromführenden Leitungen (5) parallel geschaltet sind, und
- **dass** die Drosseln (15, 16) in allen stromtragenden Leitungen (5, 6) von den mindestens zwei Eingängen (2) durch Drosselwicklungen (25, 26) auf einem gemeinsamen Kern (18) einer stromkompensierten Drossel (17) gebildet sind.

2. Wechselrichter (1) nach Anspruch 1, **dadurch gekennzeichnet, dass** die Drosseln (15 und 16) jeweils eine Induktivität von 0,2 mH bis 4,0 mH aufweisen.

3. Wechselrichter (1) nach Anspruch 1 oder 2, **dadurch gekennzeichnet, dass** die Drosselwicklung (26) für die Drossel (16) in der gemeinsamen stromtragenden Leitung (6) einen n-mal größeren Leitungsquerschnitt aufweist als die Drosselwicklung (25) für jede Drossel (15) in einer der eigenen stromtragenden Leitungen (5) der mindestens zwei Eingänge (2), wobei n die Anzahl der mindestens zwei Eingänge (2) ist.

4. Wechselrichter (1) nach Anspruch 3, **dadurch gekennzeichnet, dass** der n-mal größere Leitungsquerschnitt der Drosselwicklung (26) für die Drossel (16) in der gemeinsamen stromtragenden Leitung (6) der Leitungsquerschnitt eines einzelnen dicken Drahtleiters ist.

5. Wechselrichter (1) nach Anspruch 3, **dadurch gekennzeichnet, dass** der n-mal größere Leitungsquerschnitt der Drosselwicklung (26) für die Drossel (16) in der gemeinsamen stromtragenden Leitung (6) der gemeinsame Leitungsquerschnitt mehrerer parallel geführter Drahtleiter ist.

6. Wechselrichter (1) nach einem der vorhergehenden Ansprüche, **dadurch gekennzeichnet, dass** der gemeinsame Kern (18) symmetrisch mit den Drosselwicklungen (25, 26) bewickelt ist.

7. Wechselrichter (1) nach einem der vorhergehenden Ansprüche, **dadurch gekennzeichnet, dass** der gemeinsame Kern (18) ein ungeschlitzter Kern ist.

8. Wechselrichter (1) nach einem der vorhergehenden Ansprüche, **dadurch gekennzeichnet, dass** der gemeinsame Kern (18) innerhalb eines Gehäuses des Wechselrichters (1) hochkant ausgerichtet ist, wobei die Drosselwicklung (26) für die Drossel (16) in der gemeinsamen stromtragenden Leitung (6) im Vergleich zu den Drosselwicklungen (25) für jede Drossel (15) in einer der eigenen stromtragenden Leitungen (5) an einer Stelle angeordnet ist, die einem Kühlluftstrom für die stromkompensierte Drossel (17) leichter zugänglich ist.

9. Wechselrichter (1) nach einem der vorhergehenden Ansprüche, **dadurch gekennzeichnet, dass** die Filterkondensatoren (19) zwischen den Drosseln (25, 26) und den DC/DC-Wandlern (7) nach Erde (PE) führen.

10. Wechselrichter (1) nach Anspruch 9, **dadurch gekennzeichnet, dass** die Filterkondensatoren (19) nach Erde (PE) mit in Reihe geschalteten Widerständen (23) bedämpft sind.

11. Wechselrichter (1) nach Anspruch 10, **dadurch gekennzeichnet, dass** die Widerstände (23) bei Kapazitäten der Filterkondensatoren (19) von mindestens 47 nF einen ohmschen Widerstand von 0,5 bis 10 Ohm aufweisen.

12. Wechselrichter (1) nach einem der Ansprüche 9 bis 11, **dadurch gekennzeichnet, dass** weitere Filterkondensatoren (20) zwischen den Eingängen (2) und den Drosseln (15, 16) nach Erde (PE) führen, die eine kleinere Kapazität als die zwischen den Drosseln (15, 16) und den DC/DC-Wandlern (7) nach Erde (PE) führenden Filterkondensatoren (19) aufweisen und unbedämpft sind.

13. Wechselrichter (1) nach Anspruch 12, **dadurch gekennzeichnet, dass** die weiteren Filterkondensatoren (20) eine Kapazität von 0,2 nF bis 33 nF aufweisen.

14. Verwendung eines Wechselrichters (1) nach einem der Ansprüche 1 bis 13, **dadurch gekennzeichnet, dass** die Schalter der zugehörigen DC/DC-Wandler (7) synchron angesteuert werden, wenn die mindestens zwei Eingänge (2) durch harte Kopplung ihrer eigenen stromführenden Leitungen (5) parallel geschaltet sind.

## Claims

1. Inverter (1) comprising:
- a DC/AC-converter (11),
- a DC intermediate circuit (10) on the DC input side of the DC/AC-converter (11),
- a plurality of DC/DC-converters (7), the output sides of which are connected in parallel to each other to the DC intermediate circuit (10),
- a plurality of inputs (2) each leading to one of the DC/DC-converters (7) and
- an EMC filter (9) connected between the inputs (2) and the DC/DC-converters,
- wherein the EMC filter (9) comprises
- chokes (15, 16) in all current-carrying lines (5, 6) between the inputs (2) and the DC/DC-converters (7) and
- filter capacitors (19, 20) between the inputs (2) and the DC/DC-converters (7) leading to earth from all current-carrying lines (5, 6),
- wherein from at least two inputs (2) - beside in each case one own current-carrying line (5) - a common current-carrying line (6) is leading to the two associated DC/DC-converters (7) and wherein the inverter (1) is arranged to be operated in a first configuration, in which the at least two inputs (2) are connected in parallel to each other by hard-coupling of their own current carrying lines (5), and in a second configuration in which that hard-coupling is not present,
**characterized in**
- **that** a controller (13) is provided, that controls the switches of the associated DC/DC-converters (7) synchronously relative to each other, if the at least two inputs (2) are connected in parallel to each other by hard-coupling of their own current-carrying lines (5), and
- **that** the chokes (15, 16) in all current-carrying lines (5, 6) of the at least two inputs (2) are formed by choke windings (25, 26) on a common core (18) of a current-compensated choke (17).

2. Inverter (1) according to claim 1, **characterized in that** the chokes (15 and 16) each comprise an inductance of 0.2 mH to 4.0 mH.

3. Inverter (1) according to claim 1 or 2, **characterized in that** the choke winding (26) for the choke (16) in the common current-carrying line (6) has an n-times larger line cross section than the choke winding (25) for each choke (15) in one of its own current-carrying lines (5) of the at least two inputs (2), where n is the number of the at least two inputs (2).

4. Inverter (1) according to claim 3, **characterized in that** the n-times larger line cross-section of the choke winding (26) for the choke (16) in the common current-carrying line (6) is the line cross section of a single thick wire conductor.

5. Inverter (1) according to claim 3, **characterized in that** the n-times larger line cross section of the choke winding (26) for the choke (16) in the common current-carrying line (6) is the common cross-section of a plurality of parallel guided wire conductors.

6. Inverter (1) according to one of the preceding claims, **characterized in that** the common core (18) is wound symmetrically with the choke windings (25, 26).

7. Inverter (1) according to one of the preceding claims, **characterized in that** the common core (18) is an unslotted core.

8. Inverter (1) according to one of the preceding claims, **characterized in that** the common core (18) is oriented upright within a housing of the inverter (1), wherein the choke winding (26) for the choke (16) being in the common current-carrying line (6), compared to the choke windings (25) for each choke (15) in one of its own current-carrying lines (5), is arranged at a location that is more easily accessible to a cooling air flow for the current compensated choke (17).

9. Inverter (1) according to one of the preceding claims, **characterized in that** the filter capacitors (19) between the chokes (25, 26) and the DC/DC converters (7) lead to ground (PE).

10. Inverter (1) according to claim 9, **characterized in that** the filter capacitors (19) to earth (PE) are attenuated with resistors (23) connected in series.

11. Inverter (1) according to claim 10, **characterized in that** the resistors (23) have an ohmic resistance of 0.5 to 10 ohms at capacitances of the filter capacitors (19) of at least 47 nF.

12. Inverter (1) according to one of claims 9 to 11, **characterized in that** further filter capacitors (20) are leading to ground (PE) between the inputs (2) and the chokes (15, 16) and having a smaller capacitance than that filter capacitors (19) leading to ground (PE) between the chokes (15, 16) and the DC/DC converters (7) and are undamped.

13. Inverter (1) according to claim 12, **characterized in that** the further filter capacitors (20) have a capacitance of 0.2 nF to 33 nF.

14. Use of an inverter (1) according to any one of claims 1 to 13, **characterized in that** the switches of the associated DC/DC converters (7) are controlled synchronously, if the at least two inputs (2) are connected in parallel to each other by hard coupling of their own current-carrying lines (5).

## Revendications

1. Onduleur (1) avec :
- un convertisseur CC/CA (11),
- un circuit intermédiaire à tension continue (10) du côté d'entrée de tension continue du convertisseur CC/CA (11),
- plusieurs convertisseurs CC/CC (7), lesquels sont raccordés du côté extérieur de manière parallèle entre eux au circuit intermédiaire de tension continue (10),
- plusieurs entrées (2) menant respectivement vers l'un des convertisseurs CC/CC (7) et
- un filtre CEM (9) couplé entre les entrées (2) et les convertisseurs CC/CC,
dans lequel le filtre CEM (9) comprend
- des inductances (15, 16) dans toutes les lignes porteuses de courant (5, 6) entre les entrées (2) et les convertisseurs CC/CC (7) et
- des condensateurs de filtrage (19, 20) menant de toutes les lignes porteuses de courant (5, 6) entre les entrées (2) et les convertisseurs CC/CC (7) vers la terre,
dans lequel, à partir d'au moins deux entrées (2) - en plus respectivement d'une ligne porteuse de courant propre (5) - une ligne porteuse de courant commune (6) mène vers les deux convertisseurs CC/CC (7) associés et l'onduleur (1) est configuré pour être utilisable dans une première configuration dans laquelle les au moins deux entrées (2) sont couplées en parallèle par couplage fort de leurs propres lignes de conduite de courant (5) et dans une deuxième configuration dans laquelle ce couplage n'a pas lieu,
**caractérisé en ce**
- **qu'**une commande (13) est prévue, laquelle commande de façon synchrone les commutateurs des convertisseurs CC/CC (7) associés lorsque les au moins deux entrées (2) sont couplées en parallèle par couplage fort de leurs propres lignes de conduite de courant (5), et
- **que** les inductances (15, 16) dans toutes les lignes porteuses de courant (5, 6) des au moins deux entrées (2) sont formées par des bobines d'inductance (25, 26) sur un noyau commun (18) d'une inductance compensée en courant (17).

2. Onduleur (1) selon la revendication 1, **caractérisé en ce que** les inductances (15 et 16) présentent respectivement une inductance de 0,2 mH à 4,0 mH.

3. Onduleur (1) selon la revendication 1 ou 2, **caractérisé en ce que** la bobine d'inductance (26) pour l'inductance (16) dans la ligne porteuse de courant commune (6) présente une section transversale du conducteur n fois plus grande que la bobine d'inductance (25) pour chaque inductance (15) dans l'une des lignes porteuses de courant propres (5) des au moins deux entrées (2), dans lequel n est le nombre des au moins deux entrées (2) .

4. Onduleur (1) selon la revendication 3, **caractérisé en ce que** la section transversale du conducteur n fois plus grande de la bobine d'inductance (26) pour l'inductance (16) dans la ligne porteuse de courant commune (6) est la section transversale du conducteur d'un fil conducteur épais individuel.

5. Onduleur (1) selon la revendication 3, **caractérisé en ce que** la section transversale du conducteur n fois plus grande de la bobine d'inductance (26) pour l'inductance (16) dans la ligne porteuse de courant commune (6) est la section transversale du conducteur commune de plusieurs fils conducteurs menés parallèlement.

6. Onduleur (1) selon l'une des revendications précédentes, **caractérisé en ce que** le noyau commun (18) est bobiné symétriquement par les bobines d'inductance (25, 26).

7. Onduleur (1) selon l'une des revendications précédentes, **caractérisé en ce que** le noyau commun (18) est un noyau non fendu.

8. Onduleur (1) selon l'une des revendications précédentes, **caractérisé en ce que** le noyau commun (18) est orienté de chant à l'intérieur d'un boîtier de l'onduleur (1), dans lequel la bobine d'inductance (26) pour l'inductance (16) dans la ligne porteuse de courant commune (6), en comparaison avec les bobines d'inductance (25) pour chaque inductance (15) dans l'une des lignes porteuses de courant propres (5), est disposée à un emplacement plus facilement accessible à un courant d'air de refroidissement pour l'inductance compensée en courant (17).

9. Onduleur (1) selon l'une des revendications précédentes, **caractérisé en ce que** les condensateurs de filtrage (19) entre les inductances (25, 26) et les convertisseurs CC/CC (7) mènent vers la terre (PE).

10. Onduleur (1) selon la revendication 9, **caractérisé en ce que** les condensateurs de filtrage (19) vers la terre (PE) sont atténués par des résistances couplées en série (23).

11. Onduleur (1) selon la revendication 10, **caractérisé en ce que** les résistances (23) présentent, en cas de capacités des condensateurs de filtrage (19) d'au moins 47 nF, une résistance ohmique de 0,5 à 10 ohms.

12. Onduleur (1) selon l'une des revendications 9 à 11, **caractérisé en ce que** d'autres condensateurs de filtrage (20) entre les entrées (2) et les inductances (15, 16) mènent vers la terre (PE), lesquels présentent une plus faible capacité que les condensateurs de filtrage (19) entre les inductances (15, 16) et les convertisseurs CC/CC (7) menant vers la terre (PE) et ne sont pas atténués.

13. Onduleur (1) selon la revendication 12, **caractérisé en ce que** les autres condensateurs de filtrage (20) présentent une capacité de 0,2 nF à 33 nF.

14. Utilisation d'un onduleur (1) selon l'une des revendications 1 à 13, **caractérisée en ce que** les commutateurs des convertisseurs CC/CC (7) associés sont commandés de façon synchrone lorsque les au moins deux entrées (2) sont couplées en parallèle par couplage fort de leurs propres lignes de conduite de courant (5).
